# EUROPEAN PATENT APPLICATION

(11) **EP 3 065 435 A1**
(43) Date of publication of application: **07.09.2016**
(21) Application number: 15845504.8
(22) Date of filing: 05.01.2015
(51) Int. Cl.: H04W 12/06, G06F 21/33, G06F 21/44

(54) **METHOD FOR GENERATING A DIGITAL IDENTITY FOR A USER OF A MOBILE DEVICE, DIGITAL USER IDENTITY, AND AUTHENTICATION METHOD USING SAID DIGITAL USER IDENTITY**

(71) Applicant: EBIID, Products & Solutions, S.L., 08173 Sant Cugat el Valles Barcelona (ES)
(72) Inventor: MASÍAS, Jordi, 08173 Sant Cugat del Vallès Barcelona (ES); TARRÉS, Xavier, 08173 Sant Cugat del Vallès Barcelona (ES); OLIVET, Roger, 08173 Sant Cugat del Vallès Barcelona (ES)
(74) Representative: Balder IP Law, S.L.
(86) International application number: PCT/ES2015/070001
(87) International publication number: WO 2016/110601

(57) **Abstract**

The invention refers to a procedure for generating a digital identity for a user (100) of a mobile device (10), based on a digital certificate generated by a certificate authority. The mobile device (10) is associated with a first mobile identification number (MSISDN). The user can access an executable application (11) which is installed either on the mobile device or on a second device that can run the application. The application:
- contains a key container for at least a public key and a private key which are associated with the aforementioned first mobile identification number;
- is associated with a unique application identifier; and
- includes connection logic for connecting with a mobile identity server (30).

The procedure consists of a series of stages whereby the user's mobile digital identity is generated from the first mobile identification number (MSISDN), the user's digital certificate, and the unique application identifier.

The invention also refers to the digital identity of a user (100), a procedure for authenticating a user which makes use of said digital identity. And an application (11) which can be installed in a mobile device (10) or a second device that is able to run the application, to generate a digital identity for the user (100) of the mobile device (10).

## Description

Procedure for generating a digital identity of a user of a mobile device, digital identity of the user, and authentication procedure using said digital identity of the user.

### Purpose of the Invention

The present invention falls under the category of authentication systems between two parties, one of the parties being a user of a mobile device, and is based on PKI (Public Key Infrastructure) and on electronic certificates, regardless of the certification authority and the phone carriers.

### Background of the Invention

In general terms, the main purpose of an authentication system is to be able to verify the identity of a user who is trying to access a remote system, or verify the authorship of an act.

To this end, different authentication elements or factors can be used: something you have (card, mobile phone, mobile phone line, etc.); something you know (password, PIN, One-Time Password); or a biometric characteristic of the user (iris, voice, fingerprint, etc.).

In certain systems, one of these factors is not enough to guarantee the identity; for this reason, two-factor authentication is used in some systems. These are usually called 'strong authentication systems' or 'dual authentication systems'.

The party requesting the authentication tends to be an online application which is accessed from a browser, either physically or using an application. At the moment, most systems use only one authentication factor, which usually is a key or a password, which they validate themselves, or which they delegate to third parties (e.g. Facebook connect, OAuth, etc.).

With the aim of increasing security and mitigating the risk of compromising passwords, some systems use a second factor. In this case, there is usually a combination of something the user knows (PIN or password) and something the user has, which is unique and very difficult to replicate. This second factor tends to be a physical device in the sole possession of the user, which makes it possible for the system requesting the authentication to ensure that the identified user has the device at the time of authentication (e.g. by means of a call to the mobile phone guaranteeing that the user has the SIM card; or sending a one-time password via SMS or an OTP-generating application).

When user authentication is carried out through a network or a channel other than the main network or channel ('out-of-band'), there is the risk of suffering a man-in-the-middle attack. The attacker may convince the user that they are accessing a legitimate website, and start the out-of-band authentication process which the user will respond to in the belief that the operation has been really requested.

This risk can be mitigated by using mutual authentication systems, i.e. the customer can verify the identity of the website where they are connecting (for example, using SSL certificates).

For transactions which require authentication, the Mobile Signature system, which uses cryptographic asymmetric keys, offers interesting advantages since it mitigates the risk inherent to an out-of-band authentication system, since the former requires that the legitimate website sends a summary of the operation it is about to authenticate to the user. The user always knows what they are about to authorise.

This Mobile Signature system is based on using digital certificates as authentication system. Using a PIN-protected private key, which is generated and stored in a mobile device, allows third-party applications to verify the requester's identity (previously certified by a Certification Authority).

The architecture of a Mobile Signature system basically consists of three parts: 1) the user who tries to access the system of the 2) client which requests the user's authentication from 3) the registration and authentication system, which keeps a log of the users and of the registered identities, and in turn establishes a secure channel between client and user during authentication.

For the user to authenticate themselves against a client using a Mobile Signature system the following is necessary: 1) the user has generated their (public and private) keys in the mobile device; 2) there is a record of the identity of the user in association with their keys; 3) the client has formalised the interconnection between their system and the registration and authentication system.

Nevertheless, Mobile Signature technology requires using cryptographic SIMs and these are not yet mass produced; for this reason, Mobile Signature is not fully interoperable between different mobile phone carriers. The operator handles both the key management application (embedded into the card) and the registration and authentication system and, as a consequence, mass deployment is difficult. As a result, it is hard to ensure the solution's scalability since there is operator dependency hardware- and network-wise.

Given the aforementioned circumstances, there is the need for an authentication system and method in wireless networks that is secure and does not depend on the mobile device's hardware or on the mobile operator.

### Description of the Invention

The present invention solves the above-mentioned problems with a distributed system for generating a digital identity, this digital identity being associated with the mobile device where keys are created using a mobile application.

A first aspect of the invention relates to a procedure for generating a digital identity of a user of a mobile device, the digital identity of the user being based on a digital certificate generated by a certification authority wherein the mobile device is associated with a first mobile identification number (e.g. MSISDN);
the user having access to an executable application which is installed either on the mobile device or on a second device that can run the application, which application:
- contains a key container capable of storing at least a public key and a private key which are associated with said first mobile identification number;
- is associated with a unique application identifier; and
- includes connection logic for connecting with a mobile identities server;
the procedure comprises:
- initialising the key container;
- checking the mobile identification number against the mobile identities server;
- creating a unique activation code by the mobile identities server;
- the application generating a request for creating the digital identity of the user, made up by the first mobile identification number (MSISDN), a public key and a private key;
- the certification authority generating the digital certificate of the user from the first mobile identification number and the public key when the unique activation code is entered into the application; and
- generating the mobile digital identity of the user from the first mobile identification number (MSISDN), the digital certificate of the user and the unique application identifier.

This means that according to this invention it is possible to have the application installed on a second device, e.g. a tablet or another smart device other than the mobile device which is associated with the first mobile identification number. The mobile digital identity of the user will be associated with the first mobile identification number but will be hosted in the application in the second device.

In any case, it should be noted that the certificate and the generated digital identity reside in the application rather than in the mobile device's SIM card; consequently, the invention frees the user from depending on the mobile operator's requirements.

Preferably, the procedure also comprises prior registration of the user of the mobile device, which comprises:
i) sending a request for registering the first mobile identification number from the mobile device to the mobile identities server;
ii) checking that the first mobile identification number does not already exist in the mobile identities server; and
iii) sending a random code from the mobile identities server to the mobile device, the code being entered into the mobile device's application to confirm registration.

Preferably, the procedure of the invention further comprises informing the mobile identities server of the unique application identifier and of the digital identity created for the first mobile identification number.

A second aspect of the invention refers to a digital identity of a user of a mobile device, the mobile device being associated with a first mobile identification number (such as MSISDN) and the user having access to an executable application installed in the mobile device or in a second device which is capable of running the application. The digital identity is generated by and resides in the mobile application, and is downloaded to said mobile device or to said second device capable of running the application, and comprises the first mobile identification number, the digital certificate of the user generated by a certification authority, and a unique application identifier.

As mentioned above, since the identity does not reside in the SIM card, there is independence from the mobile operator. Users have freedom of choice since there is no technology dependency with regard to a specific operator that provides the SIM, nor with a single certification authority. And this is a clear distinguishing characteristic.

Additionally, the digital identity may further comprise additional data related to the identity of the user, such as name, surname, address and/or email address, etc.

The invention also refers to an authentication procedure of a user of a mobile device against a client server through a mobile identities server, the procedure comprising:
- the user of the mobile device submitting a digital identity generated as defined above; and
- the mobile identities server verifying this digital identity of the user.

Using this mobile digital identity, users can sign documents and transactions with full legal acceptance.

The process of signing documents may be carried out online if there is a connection with the mobile identities server or offline if, for example, there is no signal at the time; in this case, the signature is carried out in an environment with no outside connection thanks to the application that is installed and resides in the mobile device (or, when appropriate, in the second device where the application has been installed).

The possibility provided by the authentication procedure of the invention whereby the user can be authenticated, documents signed or certain actions or tasks completed both online and offline is a very important aspect of the invention since users do not always have good coverage in their mobile devices.

The invention makes it possible to complete certain actions or tasks, sign documents and access other services without a connection, and when the connection is resumed, the information is automatically synchronised with the server in a transparent fashion and without user intervention.

Finally, the invention also refers to an application that can be installed in a mobile device or in a second mobile device capable of running the application, for generating a digital identity of the user of the mobile device, the mobile device being associated with a first mobile identification number, wherein the application:
- comprises means for connecting to a key container -residing in the mobile device-which can store at least a public key and a private key which are associated with said first mobile identification number;
- is associated with a unique application identifier; and
- includes connection logic for connecting with a mobile identities server;
the application being configured to generate the mobile digital identity of the user from the first mobile identification number, the digital certificate of the user generated by a certification authority, and the unique application identifier.

Preferably, the application is downloadable from a secure applications platform which ensures application integrity when they are installed in devices.

In this way, the invention makes it possible to generate -and in accordance with the preferred embodiments of the invention, preferably also manage- the digital identity of the user in their mobile device or mobile digital identity.

With this mobile digital identity, the user can access products or services offered by a client after authentication of the mobile digital identity, the user benefiting from the same legal safeguards as if accessing through authentication with a digital certificate for physical person.

Consequently, according to the invention, this digital identity generated and installed in the user's device can be used for several registrations and services, and is not linked to a single service nor to a certification authority, and supports all standard market certificates.

The different aspects and embodiments of the invention defined in the foregoing can be combined with one another, as long as they are compatible with each other.

Additional advantages and features of the invention will become apparent from the detailed description that follows and will be particularly pointed out in the appended claims.

### Description of the drawings

With the aim of helping to better understand the invention's characteristics in accordance with a preferential example of embodiment, and complementing this description, the following figures have been included in the description. They are not restrictive and must be used as examples only:
Figure 1 shows a diagram of the main elements of the system of the invention according to a specific embodiment.
Figure 2 shows a diagram of the exchange of messages between the system's elements in order to carry out authentication.

### Preferred embodiment of the Invention

According to the invention, authentication is carried out using an identities management system based on digital certificates, which is distributed from applications installed in the mobile device or smartphone of a user.

The proposed solution uses the user's own mobile device as a certificate custodian device and, as such, minimises costs and makes it easier to use.

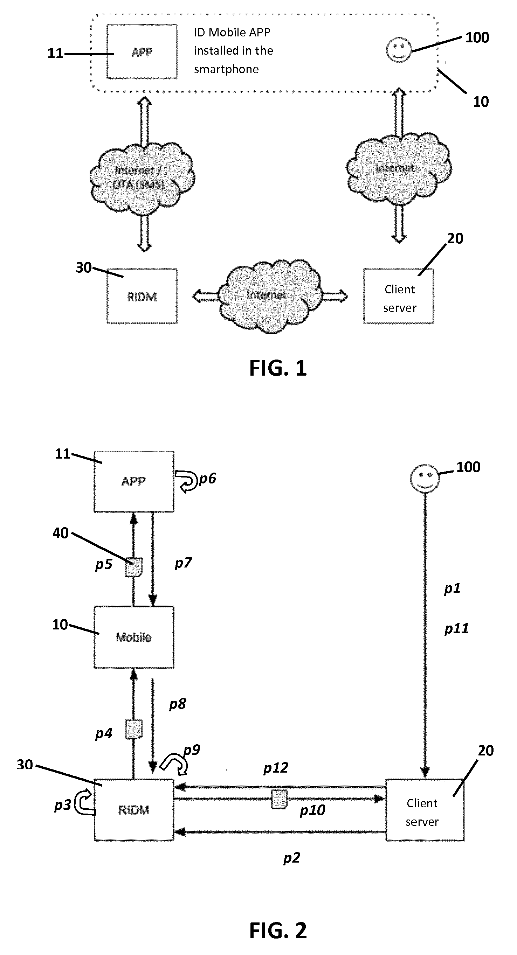

As shown in Figure 1, the system is mainly formed by three elements:
- a user 100 who has a mobile phone or smartphone 10 wherein a mobile application 11 has been installed;
- a client server 20 ('Relying Party') where the user wants to authenticate themselves; and
- a mobile identities registration and authentication server 30, RIDM.

Unlike Mobile Signature, the application 11 installed in the smartphone 10 of the user is distributed through applications platforms such as Google Play or Apple App Store; these platforms guarantee the origin (authenticity) and integrity (applications are digitally signed by the publisher) of any software installed in mobile devices. Embedded in this application is both the connection logic with the RIDM server 30, as well as a container of public and private asymmetric keys and the digital certificate generated by the application.

The registration and authentication server for mobile digital identities is based on a public key infrastructure (PKI), in other words, an entity linked to a Certification Authority enabled to handle verification of identities to issue digital certificates.

The mobile digital identity is generated from the mobile phone number, MSISDN, an identification number of the user, e.g. their ID card number, and a unique identifier associated with each application. Optionally, the mobile digital identity may include other data associated with the user's identity such as the user's name, surname and/or email address.

In addition to the identity data of the user, the RIDM server 30 is in charge of registering the mobile phone number of the user so as to be able to verify the mobile phone number MSISDN. To do this, as a first step in the registration process, the mobile application requests that the mobile phone number MSISDN be added to the RIDM server 30 by sending the mobile phone number MSISDN.

When the request is received, the RIDM server 30 checks that the mobile phone number MSISDN is not registered, and the identity associated with that number is not active, and generates a random code (e.g. 5 digits) which is sent by SMS to the provided mobile phone number, and whose hash (SHA1) is stored. Upon receiving the SMS with the random code , the random code must be entered into the mobile application to inform the RIDM server 30 that the registration process has been successfully completed. To do this, when the code is received, the RIMD server 30 checks that the code matches the previously sent code.

For tablets, the user can also register by receiving the SMS in a mobile phone, and then entering the information in the application in the tablet to verify that the user holds the phone line for that mobile phone number MSISDN.

After the MSISDN has been registered, the application 11 creates a digital identity for the user.

First, the user informs the RIDM server of their ID data (e.g. name, surname, ID card number or email address), which can be done by using the application 11 or other non-automated methods (email, manual introduction). When these data have been registered in the RIDM server 30, a unique activation code is generated. This unique activation code must be shared with the user through an out-of-band channel, such as post or by hand delivery. The user must enter this unique activation code into the mobile application 11. Upon entering the activation code in the application, the application sends it to the RIDM server to check that it matches the previously sent code and that it corresponds with the identity of the user.

The following step begins with the positive response of the RIDM server 30 to the application 11. The key container is initialised using a user-defined, password-protected PKCS#12 container. Two asymmetric keys are generated: a private and a public key.

Next, these keys are used by the application to generate a Certificate Signing Request in PKCS#10 format, which is sent to the RIDM server. The server uses the information in the PKCS#10 (unsigned digital certificate signing request) to complete the registration of the mobile digital identity of the user. After the registration has been updated, the RIDM sends the certificate request CSR to the certification authority CA for the authority to sign and issue the certificate. Once the certificate is issued, it is returned to the RIDM, which in turn delivers the certificate to the user application through a PUSH message. In other words, the digital certificate is saved in the application rather than the RIDM server. Consequently, it is possible to generate electronic signatures and complete the authentication process without being connected to the RIDM.

Also, by using PUSH technology to handle communication with the server, costs for the user associated with other types of messages (e.g. SMS) are avoided.

The application, specifically the part of the application dedicated to this purpose within the mechanism for running programmes securely and separately known as *Sandbox,* acts as custodian of the two keys and the certificate. As a consequence, the application can complete cryptographic operations without being connected to the internet.

When the user tries to access a remote server of a client 20 which requires prior authentication (step s1), an authentication process begins.

To this end, as shown in Figure 2, the client server 20 requests that the RIDM server 30 verifies the digital identity submitted by the user (step s2). The RIDM server 30 verifies whether the digital identity for the mobile phone number MSISDN has been created (step s3). Using notification systems from applications platforms (such as Google Cloud Manager 'GCM' or Apple Push Notifications 'APN'), the RIDM server 30 sends a notification to the application 11 (step s4). Each application has a unique application identifier which is communicated when the application contacts the RIDM server 30 for the first time. This allows different systems and applications to coexist for the same user. Thanks to this unique identifier, the RIDM server 30 can send PUSH messages to the application. If the digital identity for that mobile phone number MSISDN has been created, a PUSH notification (step s5) is sent to the user's application 11. This notification contains a token 40 generated with random data and information about the process to be authenticated (message, phone number and type of operation).

The user's application 11 receives the authentication notification and requests the user to enter the PIN for their private key to sign the received token (step s6). Biometric recognition could be used as an alternative to the PIN for mobile devices or smartphones compatible with this option. After digitally signing using the private key of the digital certificate in the mobile phone (step s7), the application 11 installed in the mobile phone returns the digitally signed token (e.g. using a web service (SOAP) over https as a transport protocol) to the RIDM server (step s8); the RIDM server verifies the signature (step s9) and notifies the client's remote website (step s10) that the authentication was completed successfully. The user 100 expresses their wish to proceed with the transaction for which they have been authenticated (step s11), and the client's server 20 authorises the transaction (step s12).

The server 20 generates a series of evidence centred on a ticket as information unit. After the entire authentication process has been completed, the ticket is signed and timestamped. The system acts a custodian of this evidence. According to EU regulation no. 910/2014 the trustworthy third party must provide and act as custodian of this evidence within a reliable environment.

The system described above can be used to digitally sign any electronic document. The digital signature process is analogous to the authentication process. Instead of the token, the following is sent: hash (fixed length 'summary' of the document, e.g. SHA-1) of the document to be signed, URL with rendered image of the document to be signed, and URL of original document to be signed. Using their mobile terminal, the user can check the data they are going to digitally sign. Unlike a Mobile Signature system, in which the channel capacity design- limited, the use of high-capacity channels of mobile devices such as smartphones (e.g. 3G, 4G, Wi-Fi, etc.) makes it possible to attach data such entire documents or images which will help the user to check the information to be signed.

The party which triggers the signing can select the format for the action, PADES, XADES and any future formats, since it is possible to expand the module responsible for managing electronic signing.

This system makes it possible to add direct authentication on the client's applications (app) which are distributed and installed in mobile devices through libraries. Consequently, the authentication process is carried out directly in the mobile device which contains both applications.

Using the procedure and system of the present invention, the user can identify themselves remotely and securely through the digital identity residing in their application. This application can be installed in the mobile device which provides the MSISDN or in another smart device (tablet or similar) which the user of the mobile identity can access. The mobile digital identities server or registry RIDM associates the mobile phone number of each user with specific user details (e.g. using the digital certificate) and, as a consequence, every user has a mobile digital identity or accreditation.

Any user with a smart mobile device or smartphone connected to the internet, via a wireless or Wi-Fi connection, may request, create and use their digital entity by means of the application of the invention, which is compatible with iPhone, Android and Windows Phone.

As it can be surmised from the above, the main field of application of the invention is any which requires "secure use of electronic services" so that any telematic service provider can openly use this mobile digital identity from the cloud. The invention also applies to services that require "privacy" since the user is guaranteed with access and electronic signature at the same level as the advanced signature based on a recognised certificate, in accordance with the Spanish Electronic Signature Law and the EU Electronic Signature Directive.

In view of the description and figures, the skilled person will realise that the invention has been described according to its preferred embodiments, but several variations can be introduced therein without departing from the object of the invention as claimed.

In this text, the term "comprises" and its derivations (such as "comprising", etc.) should not be understood in an excluding sense, that is, these terms should not be interpreted as excluding the possibility that what is described and defined may include further elements, steps, etc.

## Claims

1. Procedure for generating a digital identity of a user (100) of a mobile device (10), based on a digital certificate generated by a certification authority, wherein the mobile device (10) is associated with a first mobile identification number (MSISDN); and, the user having access to an executable application (11) installed in the mobile device or in a second device capable of running the application, which:
- contains a key container capable of storing at least a public key and a private key which are associated with said first mobile identification number;
- is associated with a unique application identifier; and
- includes connection logic for connecting with a mobile identities server (30);
the procedure comprising:
- initialising the key container;
- checking against the mobile identities server (30) that said mobile identification number (MSISDN) is not already associated with a digital identity;
- creating a unique activation code by the mobile identities server (30);
- the application (11) generating a request for creating the digital identity of the user, made up by said first mobile identification number (MSISDN), a public key and a private key;
- the certification authority generating the digital certificate of the user from the first mobile identification number and the public key when the unique activation code is entered into the application (11); and
- generating the mobile digital identity of the user from the first mobile identification number (MSISDN), the digital certificate of said user and the unique application identifier.

2. Procedure according to claim 1, which further comprises prior registering the user of the mobile device (10), which comprises:
i) sending a request for registering the first mobile identification number (MSISDN) from the mobile device (10) to the mobile identities server (30);
ii) checking that the first mobile identification number does not already exist in the mobile identities server (30); and
iii) sending a random code from the mobile identities server (30) to the mobile device (10), the random code being entered into the mobile device's application to confirm registration.

3. Procedure according to any of claims 1-2, which further comprises informing the mobile identities server (30) of the unique application identifier and of the digital identity created for the first mobile identification number (MSISDN).

4. Procedure according to any of claims 1-3, wherein the application (11) is downloadable from a secure applications platform.

5. Digital identity of a user (100) of a mobile device (10), the mobile device (10) being associated with a first mobile identification number (MSISDN) and the user having access to an executable application (11) installed in the mobile device or in a second device capable of running the application;
wherein the digital identity is **characterised by** being generated by and residing in the application (11), and is downloaded to said mobile device or to said second device capable of running the application;
comprising:
- the first mobile identification number (MSISDN),
- a digital certificate for the user (100) generated by a certification authority; and
- a unique identifier of said application (11).

6. Digital identity according to claim 5, which further comprises additional data related to the identity of the user (100).

7. Authentication procedure of a user (100) of a mobile device (10) against a client server (20) through a mobile identities server (30), comprising:
- the user (100) of the mobile device (10) submitting a digital identity generated according to any of claims 5-6; and
- the mobile identities server (30) verifying the digital identity of the user (100).

8. An application (11) which can be installed in a mobile device (10) or in a second device capable of running the application, for generating a digital identity of the user (100) of the mobile device (10), the mobile device (10) being associated with a first mobile identification number (MSISDN);
the application (11) being **characterised in that**:
- it comprises means for connecting to a key container capable of storing at least a public key and a private key which are associated with said first mobile identification number;
- it is associated with a unique application identifier; and
- it includes connection logic for connecting with a mobile identities server (30);
the application (11) being configured to:
- generate the mobile digital identity of the user from the first mobile identification number (MSISDN), the digital certificate of the user generated by a certification authority, and the unique application identifier.
